(19) Europäisches Patentamt
European Patent Office
Office européen des brevets

(11) Publication number: **0 205 702 A2**

(12) **EUROPEAN PATENT APPLICATION**

(21) Application number: **85307262.7**

(22) Date of filing: **10.10.85**

(51) Int. Cl.⁴: **C 08 G 73/14**, C 08 J 9/08

(30) Priority: **13.06.85 US 744419**

(43) Date of publication of application: **30.12.86 Bulletin 86/52**

(84) Designated Contracting States: **AT BE CH DE FR GB IT LI LU NL SE**

(71) Applicant: **Gagliani, John, 6280 Lance Place, San Diego California 92120 (US)**
Applicant: **Long, John V., 1756 E. Lexington Avenue, El Cajon California 92021 (US)**

(72) Inventor: **Gagliani, John, 6280 Lance Place, San Diego California 92120 (US)**
Inventor: **Long, John V., 1756 E. Lexington Avenue, El Cajon California 92021 (US)**

(74) Representative: **Spencer, Graham Easdale et al, A.A. Thornton & CO Northumberland House 303-306, High Holborn, London WC1V 7LE (GB)**

(54) **Method of making polyamide-imide foams.**

(57) A method of making a flexible, flame-resistant polyamide-imide foam comprises reacting an aromatic N-substituted imidocarboxylic acid monoanhydride or an aromatic N,N'-disubstituted bisimidodicarboxylic acid (component A) with an organic diisocyanate (component B) in the presence of a tertiary amine catalyst (C) and water to form a polyamide-imide foam.

EP 0 205 702 A2

Method of making polyamide-imide foams

The present invention is concerned with a method of making flexible, flame-resistant polyamide-imide foams and with certain of the products obtained by such a method.

U.S. Patents 4161477, 4183838 and 4183839 disclose certain polimide compositions and methods of preparing adhesives and coatings using those compositions. The coating and adhesive compositions described are made by reacting an aromatic tetracarboxylic acid dianhydride with a lactam or aminoacid to give an N,N'-disubstituted bisimidodicarboxylic acid, which is then mixed with an inert solvent and a diamine to give a viscous liquid comprising an intimate, unpolymerised mixture of the bisimidodicarboxylic acid and the diamine which can be converted to a high molecular weight polymer on heating.

The composition is coated on to a surface or placed between two surfaces and heated at a temperature from 177° to 316°C,a tough highly adherent coating or adhesive is obtained. However, the composition is not suitable for use in applications which require a cellular or foam material, since conventional agitation foaming and the addition of known blowing agents add to the costs and complexity of the process and are not entirely effective at the relatively high temperatures required

for polymerisation.

A method of making polyimide foams which largely overcomes these difficulties is described in U.S. Patents 4394464 and 4426463. According to this method, an aromatic anhydride is reacted with a lactam or aminoacid at a temperature of about 190°C to form an N-substituted aliphatic imidocarboxylic acid. The product is cooled below about 70°C, dissolved in an esterifying solvent, and the mixture is refluxed for at least 60 minutes in order to esterify the imidocarboxylic acid; a diamine is added and the mixture dried and ground to a powder. The powder is then heated to at least 200°C to produce an excellent flexible foam.

European Patent Application 85302657.3 discloses another method for making foam which can be controlled during processing to produce foams having compositions varying from almost entirely polyimide-amide to a mixture of polyimide and polyimide-amide. According to this method, an aromatic dianhydride is reacted with a lactam or aminoacid in an alcohol at a temperature of from 60° to 120°C, a diamine is added and the mixture is dried to a powder, which is then heated to produce a foam. The polymeric composition of the resulting foam, and therefore its physical properties,depend upon the foaming temperature, which is in the range 230° to 315°C. Although foams having desired physical properties can easily be prepared by this method the process requires high temperatures and several complex operations.

Although the prior art methods often produce excellent foams, these methods are undesirably complex, requiring a number of sequential steps to be carefully performed at various relatively high temperatures. This tends to result in high energy costs and sometimes varying product quality due to processing variations.

We have now developed a method of preparing polyimide foams which is less complex than the multi-step processes of the prior art and can be operated at lower temperatures. Furthermore, the foams obtained have improved flexibility and flame resistance.

According to the present invention, there is provided a method of making a flexible flame-resistant polyamide-imide foam, which comprises reacting an aromatic N-substituted imidocarboxylic acid monoanhydride or an aromatic N,N'-disubstituted bisimidodicarboxylic acid (component A) with an organic diisocyanate (component B) in the presence of a tertiary amine catalyst (C) and water to form a polyamide-imide foam.

Certain of the products which can be obtained by the method according to the invention are novel _per se_, that is to say those obtained from an aromatic N,N'-disubstituted bisimidodicarboxylic acid.

The present invention also comprises, therefore, a polyamide-imide foam comprising a polymer having the formula:

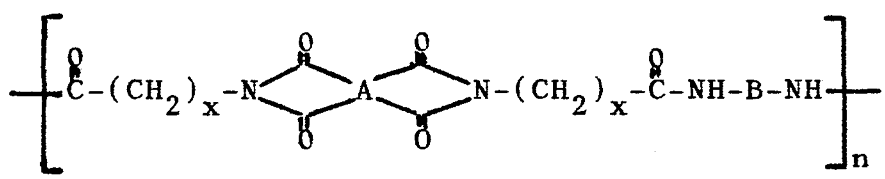

in which A is an aromatic moiety, B is a substituted or unsubstituted alkylene or phenylene moiety, n is an integer, and x is an integer of from 1 to 8.

The following is an example of the type of reaction which appears to take place between a bisimidodicarboxylic acid and an organic diisocyanate to produce a polyamide-imide foam according to the present invention:

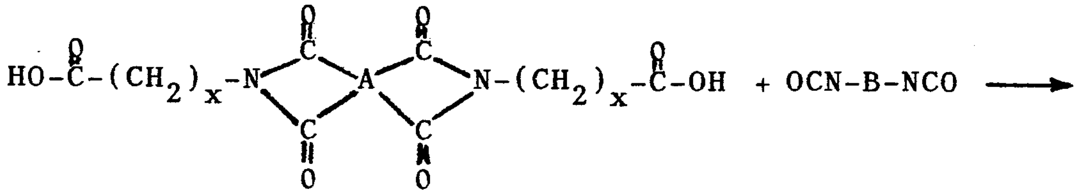

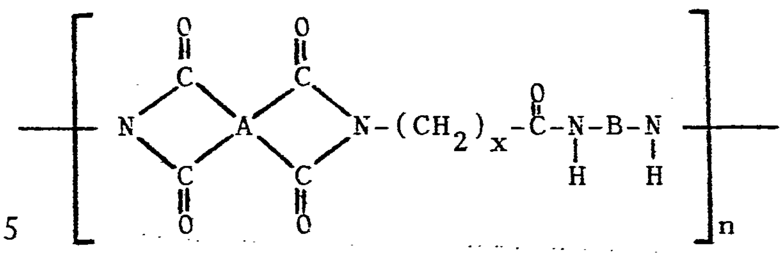 $+nCO_2$

in which A,B, n and x are as defined above. It is preferred that B is an aryl moiety; preferred substituents for B are alkyl or aryl groups.

The above reaction can be accellerated by heat and is typically carried out at a temperature of from 50° to 100°C. The reaction can also be accelerated by the addition of suitable metal salts, typically in an amount of about 3 parts by weight based on 100 parts by weight of diisocyanate. Surfactants can also be added to reduce the surface tension of the rising foam mass and reduce voids and imperfections therein. Flame retardant additives can be added, if desired, to further improve the flame resistance of the foam.

Any suitable imidocarboxylic acid monoanhydride or bisimidodicarboxylic acid can be used to prepare a polyamide-imide foam according to the method of the present invention. Typical imidocarboxylic acids include, for example, benzophenone tetracarboxyimidocaproic acid monoahydride, benzene tetracarboxyimidocaproic acid monoanhydride, benzophenone tetracarboxybisimidodicaproic acid, benzene tetracarboxybisimidodicaproic acid, polymers of benzophenone tetracarboxybisimidodicaproic acid, polymers of benzene tetracarboxybisimidodicaproic acid, and mixtures of two or more thereof.

The imidocarboxylic acid monomer can be prepared by any suitable method, but it is preferred that it is obtained by reacting a suitable lactam or aminoacid with an aromatic anhydride in suitable proportions.

Typical aromatic dianhydrides include,for example, those referred to in the patents mentioned above. Due to their ready availability at reasonable prices and the excellent foams obtained, pyromellitic dianhydride and/or 3,3',4,4'-benzophenone tetracarboxylic acid dianhydride are preferred as the dianhydride component.

Although any suitable lactam can be used, preferred lactams are those having the formula

$$H_2\overline{C - (CH_2)_x - NHC} = O$$

where x is an integer of from 1 to 7. Of these, the best results are obtained using caprolactam (x = 4). Other preferred lactams or aminoacids include 2-piperidone (x = 3), 2-pyrrolidone (x = 2), and the aminoacid equivalents of the three preferred lactams, viz. 6-aminocaproic acid, 5-aminovaleric acid and 4-aminobutyric acid. These preferred lactams and aminoacids can be used alone or as a mixture of two or more thereof. The term "lactam" will be used hereinafter to include lactams and their aminoacid equivalents.

For best results, the mole ratio of lactam to dianhydride should be in the range 0.1:1 to 10:1. At a ratio of 1:1 an imidocarboxylic acid monoanhydride is obtained, while at a ratio of 2:1 a bisimidodicarboxylic acid is obtained. At ratios of less than 1:1 the number of N-carboxylated imido groups in the resulting monomer is reduced accordingly and at ratios of greater than 2:1 condensation polymerisation can occur through extension of the lactam.

The imidocarboxylic acid monomers can be reacted with any suitable organic diisocyanate to produce a polyamide-imide foam according to the method of the invention. Suitable diisocyanates include, for example, 4,4'-diphenylmethane diisocyanate, 2,4-toluene diisocyanate, 1,6-hexamethylene diisocyanate, methylene diisocyanate,

polymeric diisocyanates, and mixtures of two or more thereof. Of these, the best results are obtained with the polymeric diisocyanate known as PAPI 94.

Any suitable ratio of diisocyanate to imidocarboxylic acid monomer can be used. Good results are contained using from 100 to 500 parts by weight of diisocyanate per 100 parts by weight of the monomer and the best results using about 150 parts.

An appropriate quantity of a suitable tertiary amine catalyst is added to the diisocyanate/monomer mixture, together with a suitable quantity of water. Typical tertiary amines include, for example, triethylamine, N-methylmorpholine, diethylcyclohexylamine, diethylethanolamine, ethyl pyridine,methyl ethyl pyridine,and mixtures of two or more thereof. The best results are obtained with N-methylmorpholine. Any suitable quantity of catalyst can be used. Good results are obtained using from 1.0 to 5.0 parts by weight of catalyst per 100 parts by weight of diisocyanate and the best results using about 2.0 parts. The water is added to start the foaming reaction. Good results are obtained using from 2 to 8 parts by weight of water per 100 parts by weight of the imidocarboxylic acid and the best results using about 5 parts.

The polymerisation/foaming reaction can be carried out under any suitable conditions. Although the reaction proceeds satisfactorily at room temperature, the rate of reaction is accelerated at slightly elevated temperatures; a temperature in the range of from 50° to 100°C is typically used.

If desired, the reaction can be accelerated by the addition of a suitable metal salt catalyst, preferably in an amount of from 1.0 to 5.0% by weight based on the weight of diisocyanate. Typical metal salt catalysts include, for example, tin oxide, tin

acetate, dibutyltin diacetate, zinc chloride, cobalt acetate, boron trifluoride,and mixtures of two or more thereof. The best results are obtained with about 3% by weight of dibutyltin diacetate.

Surfactants can be added to improve the uniformity of the foam and to reduce voids and other imperfections.

Typical surfactants include, for example, Dow Corning 190 or 193 (silicone surfactants), FC430 from Minnesota Mining and Manufacturing Co., Zonyl FSC from E.I. duPont deNemours & Co., L550 from Union Carbide Corp., and BRIJ-78, a polyoxyethylene ether, from ICI America. Good results are obtained with silicone surfactants. It has been found that DC193, a silicone surfactant from Dow Corning, gives the best results. Preferably the surfactant is used in an amount of from 1 to 20% by weight based on the weight of imidocarboxylic acid.

Flame retardant additives can also be added to improve the already high flame resistance of the foams. These include, for example, aluminium hydroxide, chlorinated compounds, phosphates such as tricresyl phosphate, triphenyl phosphate ,chlorotrialkyl phosphates, and chloroaryl phosphates, borates such as zinc borate, fully cured polyimide powders, and mixtures of two or more thereof. Generally, from 10 to 50% by weight of retardant, based on the total weight of the composition, is found to be effective.

Other additives, such as ultraviolet absorbers, reinforcing fibres, fillers, etc., can be added to the diisocyanate/monomer mixture in any suitable amount prior to adding the amine catalyst and the water.

In order that the invention may be more fully understood, the following Examples are given by way of illustration.

Example 1

322.2g (1.0 mole) of 3,3',4,4'-benzophenone tetracarboxylic acid dianhydride and 113.6g (1.0 mole) of caprolactam were mixed in a two litre flask and the mixture was heated at a temperature of about 190°C for a period of from 0.5 to 5 hours. The reaction mixture was transferred, while hot, to an open dish and allowed to cool to room temperature. The resulting solid product was crushed, pulverised, and screened through a U.S. mesh screen No.50. The product obtained was essentially benzophenone tetracarboxyimidocaproic acid monoanhydride. 30g of the product, 1.9g of diethylethanolamine, 51.0g of PAPI 94 (a polymeric diisocyanate from the Upjohn Corporation), and 16.0g of water were mixed together and stirred well; the mixture foamed spontaneously. After about 30 minutes the foam cured to a dry, flexible foam which was self-extinguishing after exposure to open flame.

Example 2

226.3g (2.0 mole) of caprolactam was reacted with 322.2g (1.0 mole) of 3,3',4,4'-benzophenone tetracarboxylic acid dianhydride in a two litre flask and the mixture was heated at a temperature of about 210°C. The solid product obtained on cooling was benzophenone tetracarboxybisimidodicaproic acid. 18.2g of this product was mixed in a beaker with 4.5g of DC 193 silicone surfactant from Dow Corning and 3g of N-methylmorpholine and the mixture was stirred for about 8 minutes. 19.6g of PAPI 94 (see Example 1) followed by 1.3g of water were then stirred into the mixture. The mixture foamed spontaneously to produce a flexible, flame resistant foam.

Example 3

The procedure of Example 2 was repeated, except that the dianydride used was benzene tetracarboxylic acid dianhydride instead of 3,3',4,4'-benzophenone

tetracarboxylic acid. An excellent, flexible foam was obtained.

Example 4

The procedure of Example 2 was repeated, but using the following lactams and quantities instead of 2.0 moles of caprolactam: (1) 2.0 moles of 2-piperidone, (b) 2.0 moles of 2-pyrrolidone, (c) 2.0 moles of 6-aminocaproic acid, and (d) 2.0 moles of 4-aminobutryic acid. In each case, an excellent foam was obtained.

Example 5

The procedure of Example 2 was repeated, but using the following diisocyanates and quantities instead of 19.6g of PAPI 94: (a) 19.6g of 4,4'-diphenylmethane diisocyanate and (b) 14.0g of 2,4-toluene diisocyanate. In each case, an excellent flame-resistant foam was obtained.

Example 6

The procedure of Example 1 was repeated, but using the following tertiary amines and quantities instead of 1.9g of diethanolamine: (a) 1.9g of triethylamine, (b) 1.9g of N-methylmorpholine, (c) 1.9g of ethyl pyridine, and (d) a mixture of 10.0g of diethylethanolamine and 10.0g of methyl ethyl pyridine. Foams having excellent properties were obtained in all cases.

Example 7

The procedure of Example 2 was repeated, but the following quantities of water were added instead of 1.3g: (a) no water, (b) 0.3g of water, (c) 1.0g of water, (d) 2.5g of water, (e) 5.0g of water,and (f) 10.0g of water. With no water, no foam was obtained. In the other cases, the best results were obtained with 2.5g of water ((d)). With the very large quantities of water ((e) and (f)), the foam was impregnated with excess water.

Example 8

The procedure of Example 1 was repeated, but the

reaction between the imidocarboxylic acid monomer and the diisocyanate was carried out at the following temperatures: (a) 20°C, (b) 50°C, (c) 100°C, and (d) 250°C. The best results were obtained at a temperature of 50°C ((b)). The lower temperature of (a) also gave a good foam, but the higher temperatures of (c) and (d) resulted in foam collapse.

Example 9

The procedure of Example 2 was repeated, but the following metal salts were added as catalysts just before the addition of the water: (a) 0.8g of tin oxide (b) 0.8g of dibutyltin diacetate, (c) 0.8g of zinc chloride, and (d) a mixture of 0.4g of cobalt acetate and 0.4g of boron trifluoride. In all cases, satisfactory foams were obtained, but (b) produced a foam with very little unreacted skin.

Example 10

The procedure of Example 1 was repeated, but the following additives are added just before the addition of the water: (a) 20g of aluminium hydroxide, (b) 20g of tricresyl phosphate, (c) a mixture of 10g of zinc borate and 10g of triphenyl phosphate, (d) 20g of finely divided, fully cured polymide powder prepared by the method described in U.S. Patent 4161477, (e) 20g of finely divided glass fibres, and (f) 20g of chopped graphite fibres. The foams produced in (a) to (d) were found to have excellent flame resistance and those obtained from (e) and (f) had improved compressive strength.

Example 11

The procedure of Example 1 was repeated and the foamable material was shaped as follows immediately after the water was added: (a) the foam was prepared in a conventional vented box-like mould to give a rectangular foam block, (b) the foam was extruded from a conventional extrusion device as it foamed in order to obtain rod-like

foam structures, and (c) the material was spread on a moving belt as it foamed in order to produce a long sheet of foam. In all cases, satisfactory products were obtained.

Claims:

1. A method of making a flexible flame-resistant polyamide-imide foam, which comprises reacting an aromatic N-substituted imidocarboxylic acid monoanhydride or an aromatic N,N'-disubstituted bisimidodicarboxylic acid (component A) with an organic diisocyanate (component B) in the presence of a tertiary amine catalyst (C) and water to form a polyamide-imide foam.

2. A method according to claim 1, in which component A is benzophenone tetracarboxyimidocaproic acid monoanhydride, benzene tetracarboxyimidocaproic acid monoanhydride, benzophenone tetracarboxybisimidodicaproic acid, benzene tetracarboxybisimidodicaproic acid, a polymer of benzophenone tetracarboxybisimidodicaproic acid, a polymer of benzene tetracarboxybisimidodicaproic acid, or a mixture of two or more thereof.

3. A method according to claim 1 or 2, in which component A is prepared by reacting an aromatic dianhydride (component D) with a lactam or aminoacid (component E) in a mole ratio of D:E of from 1:10 to 10:1.

4. A method according to claim 3, in which component D is pyromellitic dianhydride and/or 3,3',4,4'-benzophenone tetracarboxylic acid dianhydride.

5. A method according to claim 3 or 4, in which component E is a lactam having the formula

$$H_2\overbrace{C - (CH_2)_x - NHC} = O$$

where x is an integer of from 1 to 7.

6. A method according to any of claims 1 to 5, in which component B is 4,4'-diphenylmethane diisocyanate, 2,4-toluene diisocyanate, methylenediisocyanate, 1,6-hexamethylene diisocyanate, a polymeric diisocyanate, or a mixture of two or more thereof.

7. A method according to any of claims 1 to 6, in which catalyst C is triethylamine, N-methylmorpholine, diethylcyclohexylamine, diethylethanolamine, ethyl pyridine, methyl ethyl pyridine, or a mixture of two or more thereof.

8. A method according to any of claims 1 to 7, in which a surfactant, in an amount of from 1% to 20% by weight based on the weight of component A, is mixed with the composition before the addition of the water.

9. A method according to any of claims 1 to 9, in which a metal salt catalyst, in an amount of from 1% to 5% by weight based on the weight of component B, is mixed with the composition before the addition of the water.

10. A polyamide-imide foam comprising a polymer having the formula

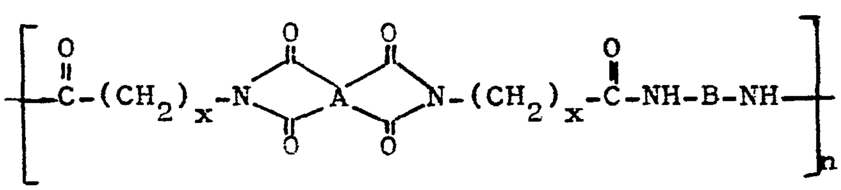

in which A is an aromatic moiety, B is a substituted or unsubstituted alkylene or phenylene moiety, n is an integer, and x is an integer of from 1 to 8.